# EUROPEAN PATENT SPECIFICATION

(11) **EP 2 290 731 B1**
(45) Date of publication and mention of the grant of the patent: **12.10.2016**
(21) Application number: 10008860.8
(22) Date of filing: 25.08.2010
(51) Int. Cl.: H01M 10/60

(54) **Battery pack**
Batteriepack
Bloc-batteries

(30) Priority: 26.08.2009 JP 2009196094
(43) Date of publication of application: 02.03.2011
(73) Proprietor: Sanyo Electric Co., Ltd., Moriguchi-city, Osaka 570-8677 (JP)
(72) Inventor: Yoneda, Haruhiko, Moriguchi City Osaka, 570-8677 (JP); Haino, Masami, Moriguchi City Osaka, 570-8677 (JP)
(74) Representative: Kotitschke, Bernd

(56) References cited:
- WO-A1-2008/034584
- DE-A1-102007 010 744
- DE-A1-102007 010 751
- DE-A1-102008 034 699
- US-A1- 2007 072 061
- US-A1- 2009 111 015

## Description

### BACKGROUND OF THE INVENTION

### 1. Field of the Invention

The present invention relates to a battery pack having many batteries disposed in multiple rows and columns, and in particular to a battery pack optimal for use on-board an electric vehicle such as an electric motor-bike (e.g. electric motor scooter and electric motorcycle) as a power source to supply high power to a driving motor.

### 2. Description of the Related Art

A battery pack used in high power applications such as in an electric motor-bike has many batteries disposed in multiple rows and columns connected in series and parallel. This type of battery pack has a plurality of batteries connected in series to increase output voltage, and connected in parallel to increase output current. A battery pack used in high output applications is charged and discharged with high currents causing battery temperature to rise. Battery electrical characteristics change with temperature. If temperature differences develop in a battery pack housing a plurality of batteries, those temperature differences result in non-uniform battery characteristics. Battery characteristic non-uniformity accelerates degradation of a given battery, and shortens the life-time of the entire battery pack. This is because battery characteristic non-uniformity causes remaining battery capacity differences, and remaining battery capacity differences make it easy to overcharge or over-discharge a given battery. Since battery degradation is accelerated by over-charging and over-discharging, a given battery degrades under these conditions and the life-time of the entire battery pack is shortened. A battery pack having a structure intended to reduce battery temperature differences has been developed to prevent this detrimental effect. (Refer to Japanese Laid-Open Patent Publication 2009-4163.)

In the battery pack of JP 2009-4163-A, many batteries with both ends inserted in battery holder insertion holes are disposed in multiple rows and columns as a battery unit. This battery unit is inserted in an external case filled with an insulating oil such as silicone oil to immerse the batteries in the insulating oil. In the battery pack of Japanese Laid-Open Patent Publication 2003-77440, hollow metal is disposed conforming to battery surface contours in valleys formed between a plurality of circular cylindrical batteries arranged in parallel orientation, and the hollow metal is filled with heat transfer cement.

In the battery pack of JP 2009-4163-A, heat generated by each battery is transferred to the insulating oil to reduce battery temperature differences. However, the structure is complex and has the drawback that manufacturing cost is high. In particular, an external case with a water-tight configuration is required to hold the insulating oil without leaking, and this structure has the drawback that external case manufacturing cost is high.

In the battery pack of JP 2003-77440-A, since hollow metal is disposed conforming to battery surfaces in valleys between batteries and filled with heat transfer cement, fabrication is difficult and the battery pack has the drawback that manufacturing cost is high. In particular, this battery pack configuration has the drawback that when many batteries are disposed in multiple rows and columns, manufacturing cost is further increased.

The present invention was developed with the object of correcting the drawbacks of the battery packs described above. Thus, it is a primary object of the present invention to provide a battery pack that can reduce battery temperature differences while allowing inexpensive manufacture in quantity. Further, it is another important object of the present invention to provide a battery pack that can reduce temperature differences between individual batteries with battery holders that dispose many batteries in multiple rows and columns.

### SUMMARY OF THE INVENTION

These objects are achieved by the subject-matter according to the independent claims. The dependent claims refer to preferred embodiments of the invention. The battery pack of the present invention is provided with a plurality of batteries 1 that can be charged, and battery holders 2 that dispose the batteries 1 in multiple rows and columns and in parallel orientation. The battery holders 2 are provided with insertion sections 21 separated by dividing walls 22 where batteries 1 are inserted and held in fixed positions. Each battery 1 contacts the dividing walls 22 in a thermally coupled manner to transfer and dissipate heat generated by the batteries 1 to the battery holders 2. The battery pack of the present invention has batteries 1 that are circular cylindrical batteries, and battery holder 2 insertion sections 21 that are circular cylinders conforming to the battery 1 surfaces. Each of the battery holder dividing walls 22 between adjacent rows has a thin part 22a, the thin part 22a becoming gradually thicker from the periphery row towards the center row of batteries 1 disposed in multiple rows to make the heat capacity of the dividing walls 22 thermally coupled with batteries 1 disposed in center regions of the battery holders 2 greater than the heat capacity of the dividing walls 22 thermally coupled with batteries 1 disposed in periphery regions of the battery holders 2.

The battery pack described above can reduce battery temperature differences while having a simple structure that can be inexpensively manufactured in quantity. Further, the battery pack has the characteristic that temperature differences between individual batteries can be reduced with battery holders that dispose many batteries in multiple rows and columns.

The thinnest part of the insertion section 21 dividing walls 22 can be made thicker in center regions of the battery holders 2 than in periphery regions. In this battery pack, circular cylindrical batteries can be thermally coupled with the dividing walls to reduce circular cylindrical battery temperature differences.

In the battery pack of the present invention, the battery holders 2 can be made of insulating plastic. In this battery pack, heat generated by each battery can be dissipated to the dividing walls to reduce battery temperature differences while insulating adjacent batteries via the battery holders.

In the battery pack of the present invention, space between the batteries 1 and the battery holders 2 can be filled with potting resin 7. In this battery pack, thermal coupling between the batteries and the battery holders can be further improved via the potting resin. Consequently, battery heat can be efficiently transferred to and dissipated in the battery holder dividing walls.

In the battery pack of the present invention, a battery case 3 can be provided to house the battery holders 2, and the inside of the battery case 3 can be filled with potting resin 7 to embed the batteries 1 in potting resin 7. Since the batteries in this battery pack are embedded in potting resin, the battery heat dissipating area is increased, and heat generated by the batteries can be efficiently dissipated.

In the battery pack of the present invention, each battery holder 2 can be configured as a pair of separate holder units 2A, and the ends of each battery 1 can be inserted in insertion sections 21 in the separate holder units 2A to dispose the batteries 1 in fixed positions. Further, fasteners 23 can be provided to fix the relative connecting position of a pair of holder units 2A, and the battery pack can be configured to join each pair of holder units 2A via the fasteners 23 while establishing flow gaps 24 that pass potting resin 7 through opposing surfaces of the holder units 2A. Each pair of holder units 2A can be joined via fasteners 23 establishing flow gaps 24, and potting resin introduced into the battery case 3 can flow through the flow gaps 24 into each holder unit 2A insertion section 21.

In this battery pack, potting resin can be introduced into the battery case to fill regions between the batteries and the battery holders without vacancies to thermally couple the batteries and the battery holders in an ideal manner. In particular, in an array of many batteries in multiple rows and columns, potting resin can be smoothly introduced between each battery and its insertion section without vacancies to thermally couple all the batteries in an ideal manner with the battery holders.

In the battery pack of the present invention, the fasteners 23 can be connecting bosses 23X that protrude from opposing surfaces of a pair of holder units 2A. The connecting bosses 23X on one side can be inserted in the connecting bosses 23X on the other side to join the pair of holder units 2A in a manner that establishes flow gaps 24. In this battery pack, pairs of holder units can be simply, easily, and accurately joined in a manner establishing flow gaps. Therefore, connected pairs of holder units can be loaded in the battery case and potting resin can be introduced to fill between the batteries and the battery holders without vacancies.

The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a battery pack for the first embodiment of the present invention;
Fig. 2 is a cross-section through the line II-II of the battery pack shown in Fig. 1;
Fig. 3 is a cross-section through the line III-III of the battery pack shown in Fig. 2;
Fig. 4 is an exploded oblique view of the battery pack shown in Fig. 1;
Fig. 5 is an exploded oblique view of the battery case and battery blocks of the battery pack shown in Fig. 4;
Fig. 6 is an oblique view of a battery block;
Fig. 7 is a vertical cross-section of the battery block shown in Fig. 6;
Fig. 8 is an exploded oblique view of the battery block shown in Fig. 6;
Fig. 9 is an exploded oblique view of the battery holder of the battery block shown in Fig. 8;
Fig. 10 is a cross-section through the line X-X of the battery block shown in Fig. 7; and
Fig. 11 is a front view from the inside of a holder unit of the battery holder shown in Fig. 9.

### DETAILED DESCRIPTION OF THE EMBODIMENT(S)

The following describes embodiments of the present invention based on the figures.

The battery pack of the present invention is primarily installed on-board an electric motor-bike to supply power to a motor that drives the bike. In particular, since the present invention has many batteries arrayed in multiple rows and columns to increase output, it is optimal for use in high output applications such as an electric vehicle. Accordingly, the battery pack of the present invention is most suitable for use as a power source in an electric vehicle such as an electric motor-bike (including an electric motor scooter and an electric motorcycle), a bicycle with electrical-assist, an electric wheel-chair, an electric three-wheeled vehicle, and an electric go-cart. The following describes in detail embodiments of a battery pack used in an electric motor-bike. However, the battery pack of the present invention is in no way limited to electric motor-bike applications.

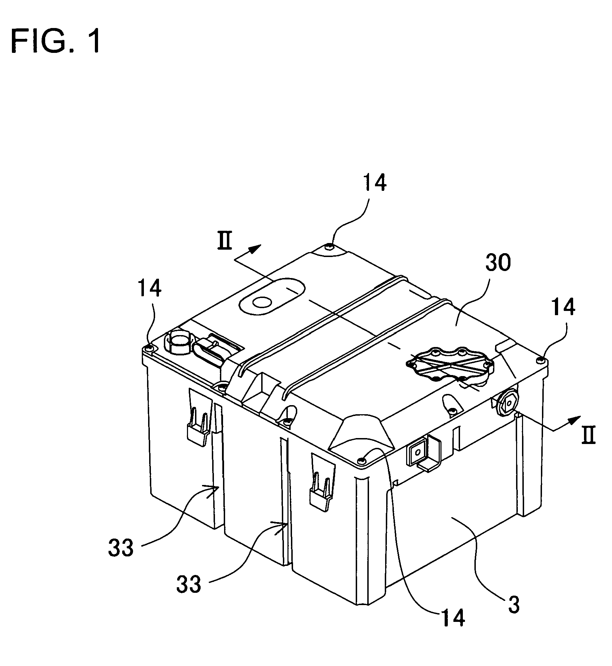

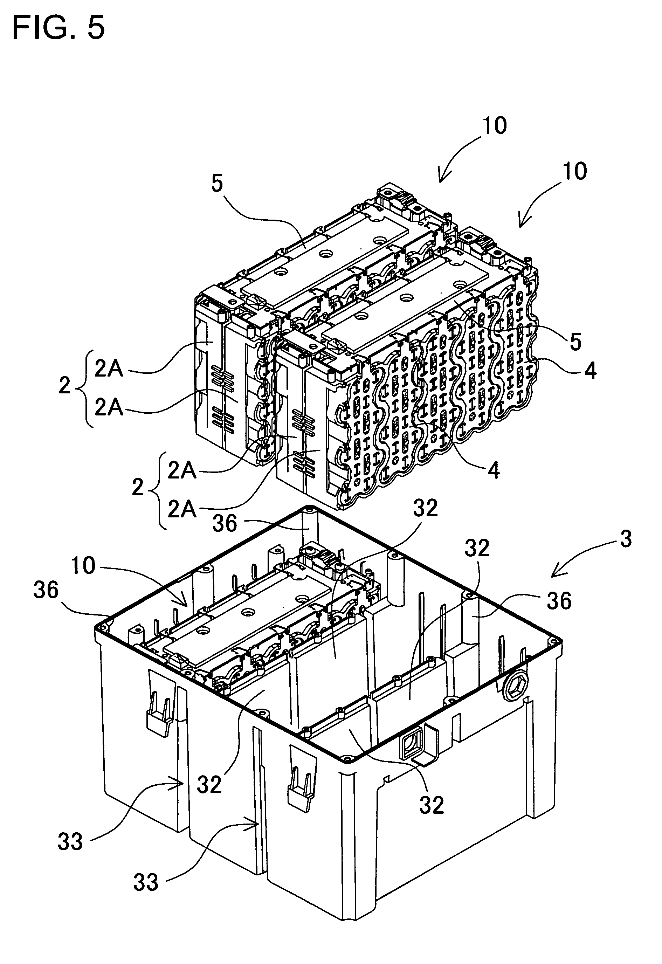

The battery pack of Figs. 1-5 has a plurality of batteries 1 disposed in multiple rows and columns in battery holders 2 to form battery blocks 10, and a plurality of battery blocks 10 are housed in a battery case 3. The battery pack of the figures has three battery blocks 10 arranged in three parallel rows inside the battery case 3. Although the battery pack of the figures has battery blocks 10 housed in a plastic battery case 3, the battery pack of the present invention does not necessarily require containment of the battery blocks in a battery case. For example, the battery blocks can be covered with an insulating film such as heat-shrink film, or the battery blocks can be embedded in potting resin without housing them in a battery case.

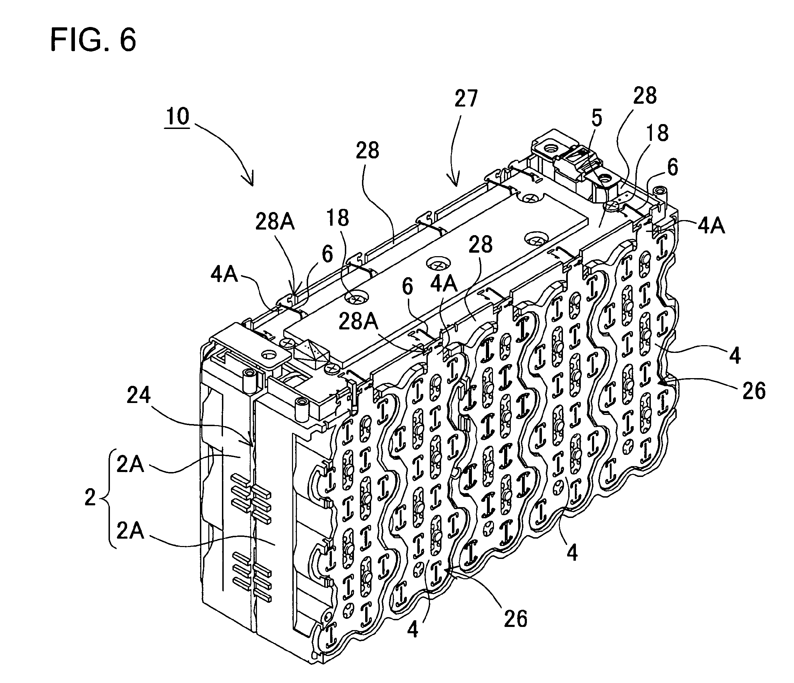

As shown in Figs. 6-10, a battery block 10 is provided with a plurality of batteries 1 that can be charged, and a battery holder 2 that disposes the batteries 1 in multiple rows and columns, and in parallel orientation. In addition, the battery block 10 of the figures is provided with a circuit board 5 connected to the batteries 1 via lead-plates 4, and the circuit board 5 is disposed in a fixed position on the battery holder 2.

The batteries 1 are lithium ion rechargeable batteries. However, the batteries can also be nickel-hydride batteries or nickel-cadmium batteries. Further, although the batteries 1 in the battery pack of the figures are circular cylindrical batteries the batteries can also be rectangular batteries. The battery block 10 of the figures has batteries arranged in parallel orientation in multiple rows and columns, and the battery holder 2 retains each battery 1 in a fixed position with the end planes of each battery 1 aligned in the same plane. The battery block 10 of the figures has a plurality of batteries 1 arranged in parallel orientation with ten batteries 1 arranged in a row and stacked in six rows to make a total array of sixty batteries 1. Specifically, the battery block 10 disposes batteries 1 in an array of six rows and ten columns. The battery block 10 of the figures has vertically adjacent batteries 1 offset to fill the valleys between batteries 1 and dispose the batteries 1 in zigzagging vertical columns. Although the battery block 10 of the figures disposes batteries 1 in six rows and ten columns, the present invention does not limit the number of batteries or the battery array configuration of the battery blocks.

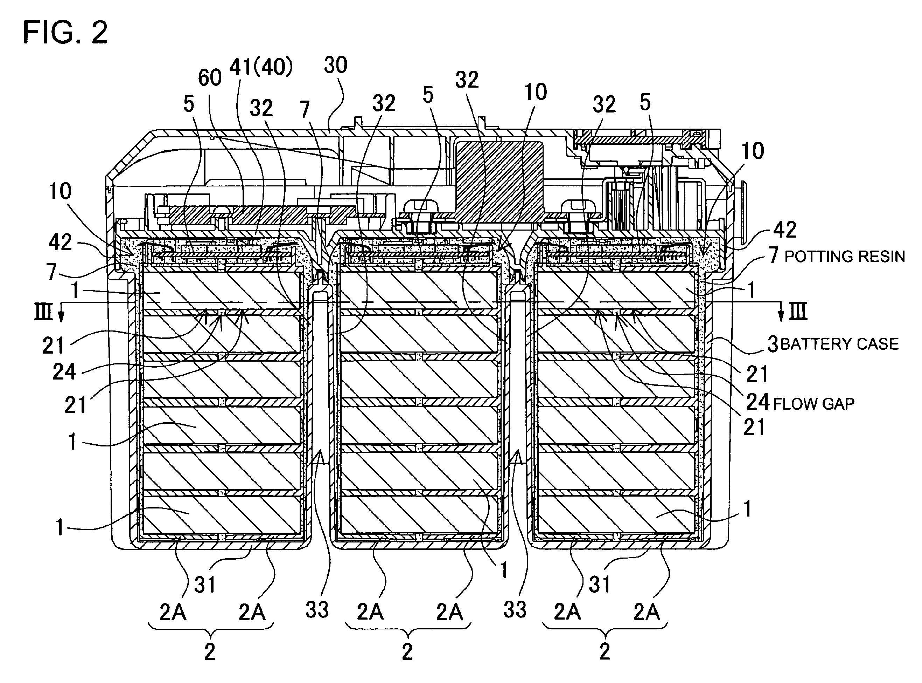

The battery pack of Figs. 2-5 has three battery blocks 10 housed in the battery case 3. Therefore, the battery pack is provided with a total of 180 batteries 1. However, the battery pack of the present invention does not specify the number of battery blocks housed in the battery case, and these types of specifications are set to numbers optimal for the application.

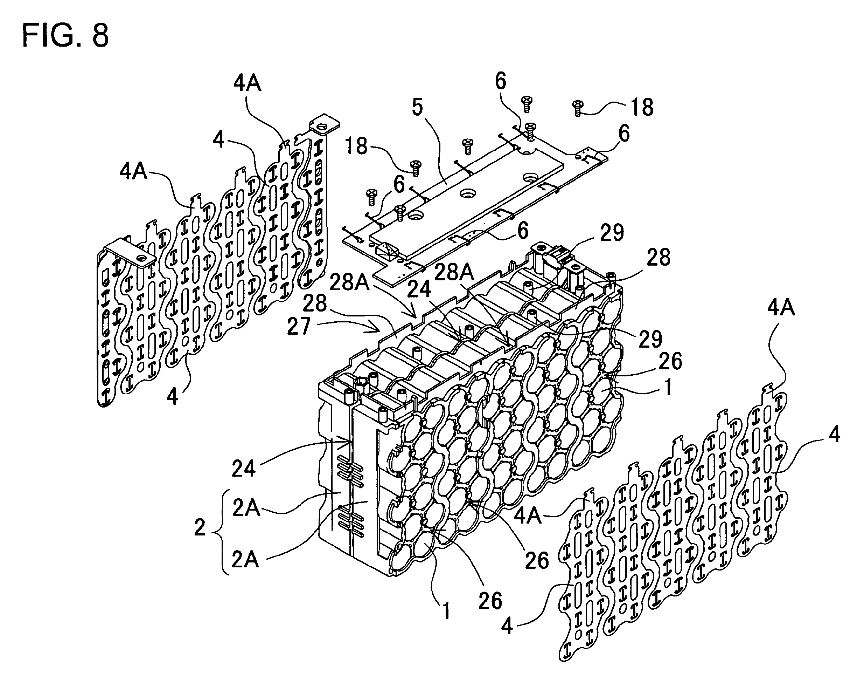

A plurality of batteries 1 are connected in series and parallel by weld-attaching lead-plates 4 to both ends of each battery 1. The lead-plates 4 connect batteries 1 in the same row in series, and connect batteries 1 disposed in the same zigzagging column in parallel. The lead-plates 4 are metal plates welded to the electrode terminals at the ends of the batteries 1 to connect batteries 1 in the same column parallel. Since the battery block 10 of Figs. 6-9 has batteries 1 in the same column disposed in a zigzag pattern, the lead-plates 4 also have a zigzag shape. A lead-plate 4 that connects batteries 1 in adjacent columns in series has a zigzag shape and a width that can connect two columns of batteries 1 together. In the battery block 10 of Fig. 8, lead-plates 4 connect ten batteries 1 in series and six batteries 1 in parallel. Specifically, sixty batteries 1 are connected ten in series and six in parallel by the lead-plates 4. The output voltage of the battery pack can be adjusted by the number of batteries 1 connected in series, and the output current can be adjusted by the number of batteries 1 connected in parallel. Since the battery block 10 of the figures has ten batteries 1 connected in series, output voltage is ten times the battery voltage. Accordingly, a battery block 10 that uses lithium ion batteries with a specified voltage of 3.7V has an output voltage of 37V.

In the battery block 10 of the figures, each lead-plate 4 is connected to the circuit board 5 mounted on the battery holder 2. This allows protection circuitry (not illustrated) on the circuit board 5 to detect the voltage of each battery 1. Each lead-plate 4 is provided with a connecting tab 4A protruding from one end that connects to the circuit board 5. Each lead-plate 4 has a lead-wire 6 connected to the connecting tab 4A to connect the lead-plates 4 to the circuit board 5 protection circuitry.

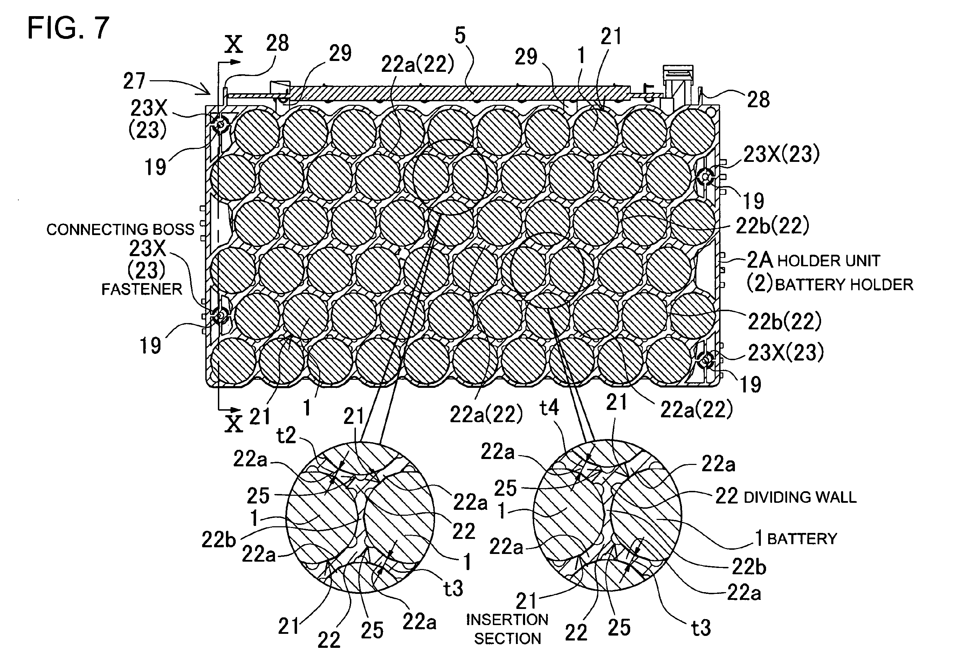

As shown in Figs. 7, 9, and 11, a battery holder 2 is provided with insertion sections 21 separated by dividing walls 22 to insert and hold the batteries 1 in fixed positions. Batteries inserted in the insertion sections 21 make contact with the dividing walls 22 in a thermally coupled manner. Heat generated by the batteries 1 is transferred to, and dissipated in the battery holder 2. The battery holder 2 holds batteries 1 inserted in the insertion sections 21 in fixed positions. The battery holder 2 is fabricated by molding insulating plastic. Since the battery block 10 shown in the figures is provided with sixty batteries 1, the battery holder 2 is shaped with dividing walls 22 that establish sixty insertion sections 21 and is formed entirely from plastic as an integrated structure. The insertion sections 21 have both ends open to allow electrode terminals at the ends of the inserted batteries 1 to be exposed to the outside.

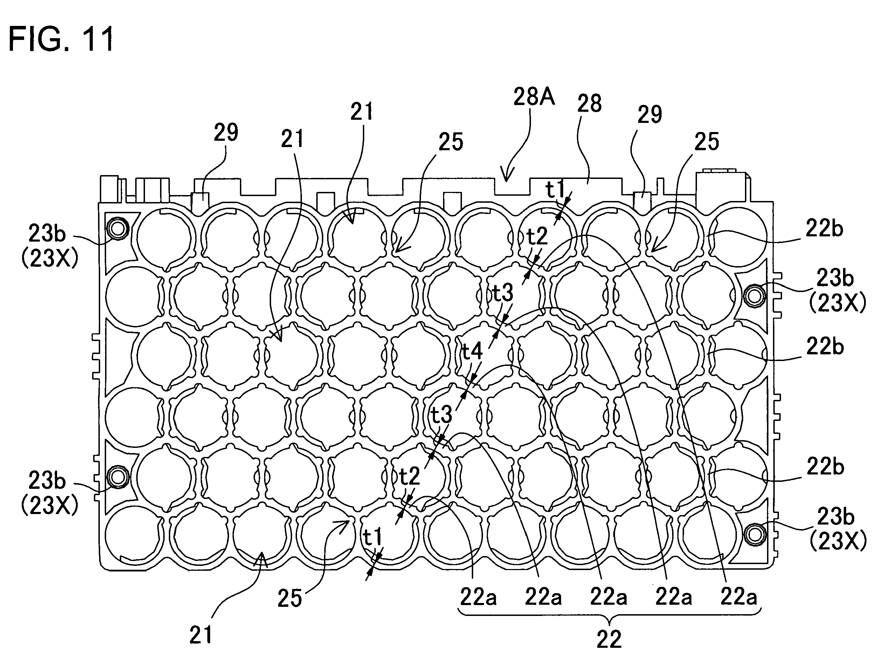

The thickness of the battery holder 2 dividing walls 22 increases from the periphery regions to the center regions. Since the battery block 10 of Figs. 7, 9, and 11 has circular cylindrical batteries 1, the battery holder 2 insertion sections 21 are circular cylinders that conform to the battery 1 surfaces. In this battery holder 2, dividing wall 22 thickness varies with position, and adjacent circular cylindrical battery 1 surfaces are closest in regions where the dividing walls 22 are thinnest. The thin part 22a of the battery holder 2 dividing walls 22 becomes thicker at center regions than at periphery regions. In the battery holder 2 of Fig. 11, the thin part 22a of the dividing walls 22 becomes gradually thicker from the periphery to the center with thickness varying from t₁=1.5mm, to t₂=2.0mm, t₃=2.5mm, and t₄=3.0mm. Although the thin part 22a of the dividing walls 22 in this battery block 10, which has batteries 1 disposed in multiple rows, becomes thicker towards the center row of batteries 1, the thickness of the thin part 22b of dividing walls 22 in the same row is the same. However, the thickness of battery holder dividing walls in the same row can also vary to become thicker at the center than at the periphery.

In a battery holder 2 with thicker dividing walls 22 at the center regions than at the periphery regions, the heat capacity of dividing walls 22 thermally coupled with batteries 1 disposed in center regions is greater than the heat capacity of dividing walls 22 thermally coupled with batteries 1 disposed in periphery regions. This is because the heat capacity of the dividing walls 22 is proportional to the product of their specific heat and volume. Dividing walls 22 with large heat capacity can reduce the temperature rise corresponding to a given amount of heat energy absorbed from the batteries 1. Therefore, by making the heat capacity of dividing walls 22 thermally coupled with batteries 1 disposed in center regions greater than that of dividing walls 22 thermally coupled with batteries 1 disposed in periphery regions, the temperature rise of batteries 1 disposed in the center regions can be reduced. Since heat is radiated to the outside from the periphery regions of the battery holder 22, the temperature of batteries 1 in the periphery regions tends to be lower. In other words, the temperature of batteries 1 in the center regions has a tendency to become higher. However, in a battery holder 2 with higher heat capacity dividing walls 22 in the center regions, the amount of battery 1 heat energy absorbed by dividing walls 22 at the center regions can be increased and the temperature rise of the center region batteries 1 can be reduced. As a result, temperature differences between batteries 1 disposed in the periphery regions and batteries 1 disposed in the center regions can be reduced.

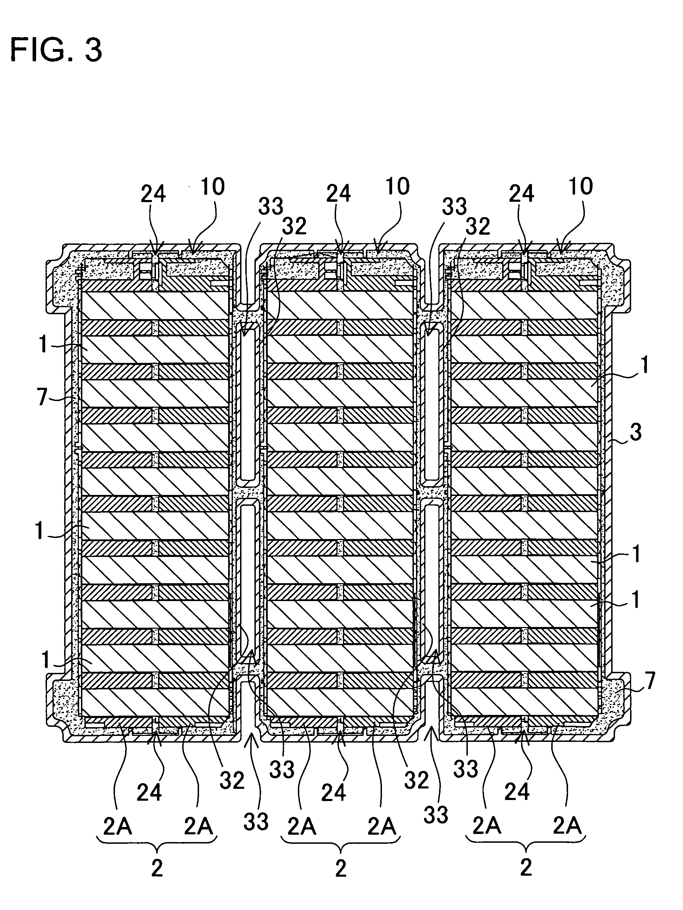

The battery pack of Figs. 2 and 3 has battery blocks 10 inserted in the battery case 3 and those battery blocks 10 are embedded in potting resin 7. All the batteries 1 can be completely embedded in potting resin 7 to thermally couple each battery 1 in an ideal manner with the battery case 3. However, it is not necessary to completely embed all the batteries 1 in potting resin 7. For example, a configuration that leaves part of the top row of batteries 1 just contacting the potting resin 7 is also possible. In a battery pack filled with potting resin 7, potting resin 7 can fill between the batteries 1 and the battery holder 2 insertion sections 21 to thermally couple the batteries 1 and the battery holders 2 in an ideal manner. To smoothly fill battery holder 2 insertion sections 21 without vacancies with potting resin 7 in a viscous fluid state, the battery holder 2 shown in Figs. 6, 8, and 9 is divided into a pair of holder units 2A. In this battery holder 2, the ends of each battery 1 are inserted into the insertion sections 21 of the separated holder units 2A to dispose the batteries 1 in fixed positions. Each holder unit 2A is provided with insertion sections 21 that can accept insertion of approximately half of each battery 1, and each battery 1 is inserted in a pair of holder units 2A to retain it in a fixed position. Further, to smoothly fill without vacancies the space between holder unit 2A insertion sections 21 and batteries 1 with potting resin 7, fasteners 23 are provided to set the relative position for joining the pair of holder units 2A.

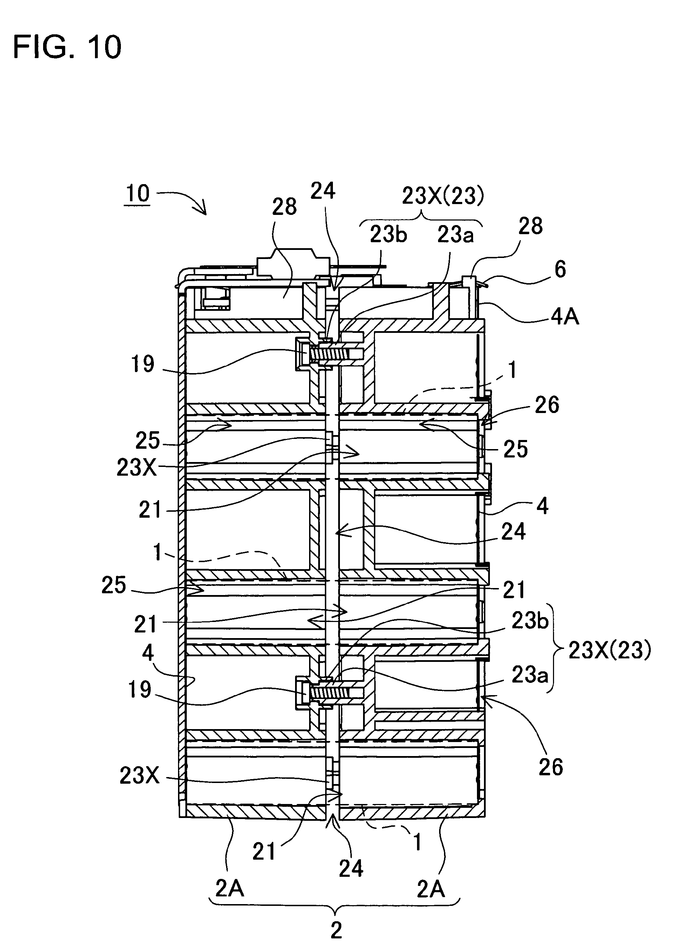

The fasteners 23 are configured to join a pair of holder units 2A in a manner that establishes flow gaps 24 that pass potting resin 7 between opposing surfaces of the holder units 2A. The fasteners 23 join a pair of holder units 2A in a manner that establishes flow gaps 24 between opposing surfaces that are for example, 1mm to 10mm, preferably 2mm to 8mm, and more preferably 3mm to 6mm. The fasteners 23 shown in Fig. 10 are connecting bosses 23X that protrude from the opposing surfaces of a pair of holder units 2A. The fasteners 23, which are connecting bosses 23X, are formed from plastic in single-piece construction with the holder units 2A. The connecting bosses 23X on one side have connecting projections 23a with circular cylindrical ends, and the ends of the connecting bosses 23X on the other side are provided with connecting cylinders 23b that accept insertion of the connecting projections 23a. These fasteners 23 join a pair of holder units 2A and establish flow gaps 24 by inserting the connecting projections 23a of the connecting bosses 23X on one side into the connecting cylinders 23b of the connecting bosses 23X on the other side. The holder units 2A have connecting bosses 23X established in the four corner regions of their opposing surfaces. The fasteners 23X are established in a plurality of locations to join the holder units 2A while forming flow gaps 24. The size of the flow gaps 24 can be set by the amount of protrusion of the connecting bosses 23X from the opposing surfaces of the holder units 2A. Specifically, the amount of protrusion of the connecting bosses 23X is a height that forms a given flow gap 24 width when the connecting projections 23a are inserted in the connecting cylinders 23b.

A pair of holder units 2A connected via the fasteners 23 described above allows potting resin 7 filling the battery case 3 to flow smoothly from the flow gaps 24 into the insertion sections 21 and fill without forming vacancies. In particular, with long narrow batteries 1 inserted in the insertion sections 21, potting resin 7 can fill between the batteries 1 and the insertion sections 21 without forming vacancies.

Further, as shown by the broken lines indicating battery outlines in Fig. 10, the shape of the inside of each holder unit 2A insertion section 21 tapers from holder unit 2A opposing surfaces, which have flow gaps 24 established, towards the battery 1 end regions. Specifically, by tapering the insides of the insertion sections 21 from the center of the battery holder 2 towards both end regions, potting resin 7 flowing in from the flow gaps 24 can be introduced more smoothly into the insertion sections 21. The insertion sections 21 that dispose the circular cylindrical batteries 1 in fixed positions have circular cylindrical shapes, the inside diameter of the insertion sections 21 becomes smaller from the center region towards both end regions, and the inside diameter of both ends of the insertion sections 21 is approximately equal to the outside diameter of the batteries 1 to retain the batteries 1 accurately in fixed positions. In addition to allowing potting resin 7 to smoothly fill these insertion sections 21, batteries 1 can also be smoothly inserted into each holder unit 2A insertion section 21. Further, with the batteries 1 inserted in the insertion sections 21, both ends of the batteries 1 contact the inside surfaces of the insertion sections 21 to hold the batteries 1 in fixed positions.

Further, as shown in Fig. 7, a battery holder 2 with potting resin 7 that fills the insertion sections 21 can be provided with filling grooves 25 on the insides surfaces of the insertion sections 21 extending in the lengthwise direction of the batteries 1. The filling grooves 25 are provided in a plurality of rows on the inside surface of each insertion section 21. In this battery holder 2, potting resin 7 in a viscous fluid state introduced from the flow gaps 24 between the holder units 2A can flow into the filling grooves 25 to smoothly fill the space between the batteries 1 and the insertion sections 21 without vacancies.

In addition, the battery holder 2 has lead-plates 4 disposed at the openings established at both ends of the insertion sections 21. The lead-plates 4 are disposed outside the insertion sections 21 and are weld-attached to the ends of the batteries 21 exposed outside the open ends of the insertion sections 21. The battery holder 2 of Figs. 6 and 8 is provided with alignment cavities 26 at the open ends of the insertion sections 21 that mate with the lead-plates 4, and the lead-plates 4 are fitted into those alignment cavities 26 and held in fixed positions. The shape of the alignment cavities 26 is made slightly larger than the outline of the lead-plates 4, and the lead-plates 4 are inserted in the alignment cavities 26 and disposed in fixed positions.

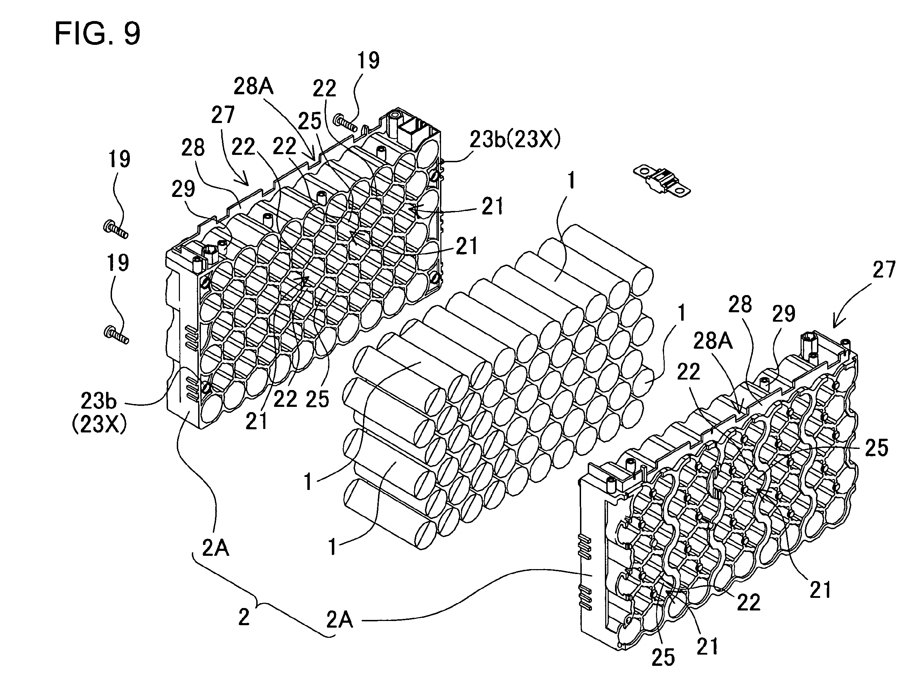

As shown in Fig. 10, a battery holder 2 that is formed in separate pieces is connected by screwing set screws 19 into the connecting bosses 23X, which are formed in single-piece construction. The battery holder 2 of Fig. 9 is provided with connecting bosses 23X formed in single-piece construction at the perimeter of the battery holder 2. The connecting bosses 23X have cylindrical shapes and set screws 19 are inserted inside the cylindrical connecting bosses 23X. However, although not illustrated, a battery holder 2 formed in separate pieces can also be joined in a locking fit configuration, joined by bonding, or joined by a combination of these methods.

Although the battery holder 2 described above is formed from plastic in two separate pieces, the battery pack of the present invention does not limit the battery holder to that structure. The battery holder can also be any other structure that can dispose a plurality of batteries in fixed positions in insertion sections. For example, the battery holder can also be a single piece that does not divide into sub-components, or it can be a structure made up of two or more separate pieces. Further, the battery pack of the present invention does not necessarily require the batteries to be embedded in potting resin. In this type of battery pack, contact surface area of the batteries and the inside surfaces of the battery holder insertion sections is increased to thermally couple the batteries and the battery holder.

The battery block 10 of Figs. 6 and 7 has a circuit board 5 mounted on its top surface. The battery block 10 of the figures, which has batteries 1 oriented horizontally, has the circuit board 5 disposed in a horizontal orientation. The battery holder 2 shown in the figures is provided with a circuit board mounting section 27 that aligns the circuit board 5 in a fixed position. The battery holder 2 shown in the figures has alignment ribs 28 formed in single-piece construction projecting upward around the perimeter of the top surface to establish the circuit board mounting section 27. The battery holder 2 of the figures is a pair of battery holders 2A joined together and alignment ribs 28 are provided around the top surface perimeter edges of each holder unit 2A except along opposing edges. This allows the circuit board 5 to be disposed on the top surface of the battery holder 2. To align and dispose the circuit board 5 inside the alignment ribs 28, the circuit board mounting section 27 alignment rib 28 outline has a shape that conforms to the perimeter of the circuit board 5. Further, the battery holder 2 shown in the figures is provided with connecting bosses 29 formed in single-piece construction that protrude from the top surface. The circuit board 5 is mounted on the connecting bosses 29 via set screws 18 to dispose the circuit board 5 in a position separated from the top surface of the battery holder 2. The circuit board 5 can have electronic components (not illustrated) mounted on the side opposite the battery holder 2 to implement circuitry such as protection circuitry. Although not illustrated, the circuit board can also be mounted on the battery holder in a locking fit configuration instead of using set screws.

Further, in the battery holder 2 of the figures, alignment ribs 28 opposite edges on both sides of the circuit board 5 are provided with cut-outs 28A to run circuit board 5 lead-wires 6 off the circuit board 5. The cut-outs 28A are provided in positions corresponding to the positions of the lead-wires 6 attached to the circuit board 5. In this battery holder 2, by running the lead-wires 6 off both sides of the circuit board 5 through the cut-outs 28A, the lead-wires 6 can be disposed without running them over the tops of the alignment ribs 28. The lead-wires 6 extending off the circuit board 5 through the cut-outs 28A are connected to the connecting tabs 4A on the lead-plates 4 to connect the lead-plates 4 to the circuit board 5.

The circuit board 5 is connected to the batteries 1 via the lead-wires 6 and the lead-plates 4. The circuit board 5 implements circuitry such as control circuitry (not illustrated) that detects the voltage of each battery 1 and controls charging and discharging of the plurality of batteries 1, and protection circuitry (not illustrated) that cuts-off charging and discharging current. The protection circuitry switches a switching device OFF to cut-off discharging current when the voltage of any battery drops below a minimum voltage. Protection circuitry also switches a switching device OFF to stop charging when the voltage of any battery becomes greater than a maximum voltage. A battery pack having protection circuitry implemented to detect the voltage of each battery and control charging and discharging can be operated safely while protecting the batteries 1. Further, the circuit board 5 also implements temperature detection circuitry that detects abnormal battery 1 temperature. Circuit board 5 temperature detection circuitry detects abnormal battery 1 temperature rise and controls battery 1 charging and discharging by operations such as restraining battery 1 charging and discharging current or stopping charging and discharging.

The battery case 3 is fabricated by molding plastic. The battery case 3 of Figs. 2-5 is formed in a box shape with an open top. This battery case 3 houses three battery blocks 10 arranged in parallel orientation and has hollow partitions 32 provided between the three battery blocks 10 for cooling. The hollow partitions 32 extend upward from the bottom panel 31 of the battery case 3, and hollow regions 33 open at the bottom are established inside the hollow partitions 32. These hollow partitions 32 are in close proximity to the battery blocks 10 disposed on both sides, are thermally coupled to the battery blocks 10, and radiate battery block 10 heat outside the battery case 3. In particular, the hollow partitions 32 increase the heat radiating surface area in contact with the ambient air to efficiently radiate battery 1 heat to the outside. Further, as a result of the thermal insulating properties of the hollow regions 33, the hollow partitions 32 can suppress conditions that induce thermal runaway of the battery blocks 10 disposed on both sides of the hollow partitions 32. This is because abnormal temperature rise in a battery block 10 on one side of a hollow partition 32 is isolated by the hollow region 33 inside the hollow partition 32.

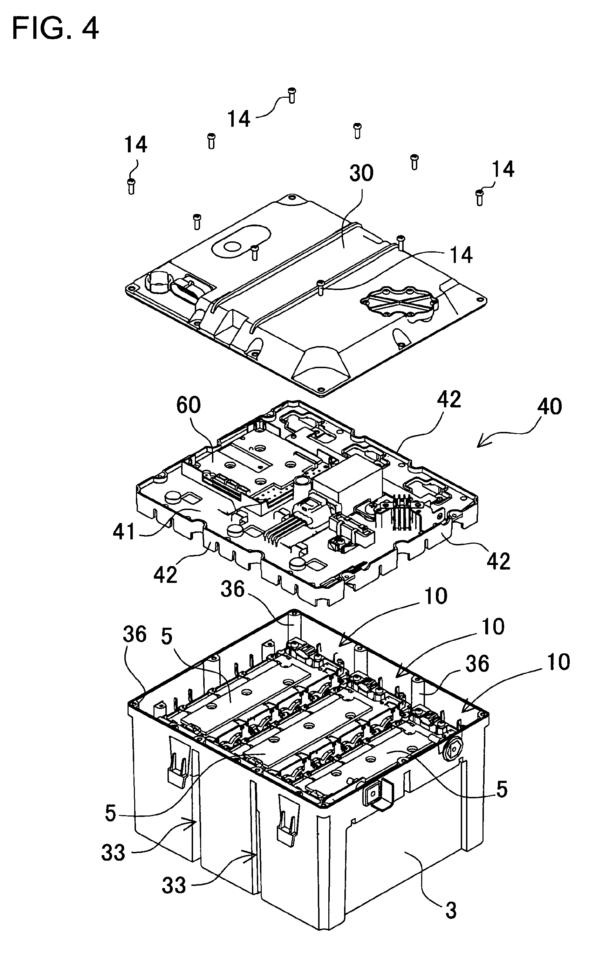

Further, the battery pack of the figures is provided with a connecting plate 40 that connects a plurality of battery blocks 10. As shown in Figs. 2 and 4, the connecting plate 40 is disposed on the top surfaces of the plurality of battery blocks 10, is attached to each battery block 10 via set screws (not illustrated), and joins the plurality of battery blocks 10 as a single unit. Since the battery blocks 10 of the figures have circuit boards 5 mounted on their top surfaces, the circuit boards 5 are disposed between the connecting plate 40 and the battery holders 2 and are protected by the connecting plate 40. In this battery pack, the plurality of battery blocks 10 can be joined as a single unit by the connecting plate 40 and housed in the battery case 3 while protecting the circuit boards 5 with the connecting plate 40. The connecting plate 40 is fabricated by molding plastic. The connecting plate 40 of Fig. 4 has perimeter walls 42 formed in single-piece construction projecting upward and downward along the perimeter of a base plate 41, which is disposed opposite the top surfaces of the plurality of battery blocks 10. The perimeter walls 42 have an outline that conforms to the inside surfaces of the open top of the battery case 3 to fit the connecting plate 40 inside the edges of the open region of the battery case 3.

Further, as shown in Figs. 2 and 4, the connecting plate 40 has a primary circuit board 60 mounted on its upper surface. The primary circuit board 60 is connected to the circuit boards 5 mounted on each battery block 10 via lead-wires (not illustrated). The primary circuit board 60 implements protection circuitry (not illustrated) that inputs signals from each circuit board 5 and controls battery 1 charging and discharging. Electronic components (not illustrated) are mounted on the primary circuit board 60 to implement circuitry such as switching devices that control discharging current based on signals input from the circuit boards 5, and relay control circuitry that controls battery 1 current. In a battery pack with a primary circuit board 60 connected to a plurality of circuit boards 5 via lead-wires (not illustrated), a switching device can be switched OFF to cut-off battery 1 current when the voltage of any battery 1 becomes greater than a maximum voltage, when the voltage of any battery 1 becomes less than a minimum voltage, when battery 1 temperature becomes greater than a maximum temperature, or when battery 1 temperature becomes less than a minimum temperature. A battery pack, which detects parameters such as the voltage and temperature of each battery 1 and controls battery current, can be safely operated while protecting the batteries 1.

The plurality of battery blocks 10 are joined as a unit by the connecting plate 40 and held in a battery case 3. A battery case 3 divided by hollow partitions 32 houses a battery block 10 in each partitioned section. The connecting plate 40 that joins the plurality of battery blocks 10 is fit into the open region of the battery case 3 and held in place by set screws (not illustrated).

In addition, the battery pack is filled with potting resin 7 in a manner that embeds the battery blocks 10, and more specifically embeds the batteries 1, housed in the battery case 3. The potting resin 7 is a resin such as urethane resin, epoxy resin, or silicone resin that is introduced in the unhardened viscous fluid state to embed the batteries 1 and battery holders 2. In a battery pack with potting resin 7 filling the battery case 3 that holds the battery blocks 10, potting resin 7 adheres closely to the inside surfaces of the battery case 3 without forming vacancies to form ideal thermal coupling between the potting resin 7 and the battery case 3. However, a battery pack with batteries embedded in potting resin can also be formed by inserting the battery blocks in shaping containers, filling the shaping containers with potting resin, removing the battery blocks from the shaping containers after potting resin hardening, and inserting the battery blocks in the battery case. By making the inside shape of the shaping containers equivalent to the inside shape of the battery case, the potting resin can-make close contact with the inside surfaces of the battery case. Since the battery blocks embedded in potting resin in this battery pack can be removed from the battery case, it has the feature that maintenance such as battery block replacement can be performed.

The battery pack described above is assembled in the following manner.
(1) As shown in Fig. 9, after inserting all the batteries 1 in the insertion sections 21 of two separate holder units 2A, the holder units 2A are joined to form the battery holder 2. The holder units 2A are joined by the fasteners 23 forming flow gaps 24 in the opposing surfaces. Further, as shown in Fig. 8, lead-plates 4 are weld-attached to the electrode terminals at the ends of each battery 1.
(2) As shown in Fig. 8, a circuit board 5 is mounted on the top surface of the battery holder 2. Set screws 18 are passed through the circuit board 5 to attach the circuit board 5 to the battery holder 2.
(3) The connecting tabs 4A of the lead-plates 4 are connected to the circuit board 5 via the lead-wires 6.
   The assembly steps described above assemble each battery block 10.
(4) As shown in Fig. 4, a plurality of battery blocks 10 is inserted in the battery case 3 and the connecting plate 40 is connected to those battery blocks 10.
(5) As shown in Fig. 2, the battery case 3 is filled with unhardened potting resin 7 in a viscous fluid state.
(6) After hardening the potting resin 7, a case cover 30 is attached to close-off the open region of the battery case 3. The case cover 30 is attached by set screws 14 that pass through the perimeter of the case cover 30 and screw into connecting bosses 36 provided at the open region of the battery case 3.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

### LABELS

1 BATTERY
2 BATTERY HOLDER
2A HOLDER UNIT
3 BATTERY CASE
4 LEAD-PLATE
4A CONNECTING TAB
5 CIRCUIT BOARD
6 LEAD-WIRE
7 POTTING RESIN
10 BATTERY BLOCK
14 SET SCREW
18 SET SCREW
19 SET SCREW
21 INSERTION SECTION
22 DIVIDING WALL
22a THIN PART
22b THIN PART
23 FASTENER
23X CONNECTING BOSS
23a CONNECTING PROJECTION
23b CONNECTING CYLINDER
24 FLOW GAP
25 FILLING GROOVE
26 ALIGNMENT CAVITY
27 MOUNTING SECTION
28 ALIGNMENT RIB
28A CUT-OUT
29 CONNECTING BOSS
30 CASE COVER
31 BOTTOM PANEL
32 HOLLOW PARTITION
33 HOLLOW REGION
36 CONNECTING BOSS
40 CONNECTING PLATE
41 BASE PLATE
42 PERIMETER WALL
60 PRIMARY CIRCUIT BOARD

## Claims

1. A battery pack comprising:
a plurality of batteries (1) that can be charged; and
battery holders (2) that dispose the batteries (1) in multiple rows and columns and in parallel orientation,
wherein the battery holders (2) are provided with insertion sections (21) separated by dividing walls (22) where the batteries (1) are inserted and disposed in fixed positions; and each battery (1) contacts the dividing walls (22) and thermally couples with the dividing walls (22) to transfer and dissipate heat generated by the batteries (1) to the battery holders (2),
wherein the batteries (1) are circular cylindrical batteries, and the battery holder (2) insertion sections (21) are circular cylinders conforming to the battery (1) surfaces,
**characterized in that**
each of the battery holder dividing walls (22) between adjacent rows has a thin part (22a), the thin part (22a) becoming gradually thicker from the periphery row towards the center row of batteries (1) disposed in multiple rows, making the heat capacity of the dividing walls (22) thermally coupled with the batteries (1) disposed in center regions of the battery holders (2) greater than the heat capacity of the dividing walls (22) thermally coupled with the batteries (1) disposed in periphery regions of the battery holders (2).

2. The battery pack as cited in claim 1 wherein the thinnest part of the insertion section dividing walls (22) is thicker in center regions of the battery holders (2) than in periphery regions.

3. The battery pack as cited in claim 1 or 2 wherein the thickness of a thin part (22b) between adjacent columns of dividing walls (22) in the same row is the same.

4. The battery pack as cited in claim 1 or 2 wherein the thickness of a thin part (22b) between adjacent column of dividing walls (22) in the same row becomes thicker towards the center of the row than at either end.

5. The battery pack as cited in any of claims 1-4 wherein the battery holder (2) is made of insulating plastic, and the battery holders (2) comprise integrally-molded dividing walls (22) which defines insertion sections (21) where the batteries (1) are inserted separately.

6. The battery pack as cited in any of claims 1-5 wherein space between the battery holder (2) and the batteries (1) is filled with potting resin (7).

7. The battery pack as cited in claim 6 wherein a battery case (3) is provided to house the battery holders (2), and the inside of the battery case (3) is filled with potting resin (7) to embed the batteries (1) in potting resin (7).

8. The battery pack as cited in claim 7 wherein each battery holder (2) comprises a pair of separate holder units (2A); the ends of each battery (1) are inserted in the insertion sections (21) of the separate holder units (2A) to dispose the batteries (1) in fixed positions,
wherein fasteners (23) are provided that are configured to fix the relative connecting position of the pair of holder units (2A), to join the pair of holder units (2A) and to establish flow gaps (24) that are able to pass potting resin (7) through the opposing surfaces of the holder units (2A), and
wherein the pair of holder units (2A) is joined via the fasteners (23) establishing flow gaps (24); and potting resin introduced into the battery case (3) is able to flow through the flow gaps (24) into each holder unit (2A) insertion section (21).

9. The battery pack as cited in claim 8 wherein the fasteners (23) are connecting bosses (23X) protruding from opposing surfaces of the pair of holder units (2A); and the connecting bosses (23X) on one side insert in the connecting bosses (23X) on the other side to join the pair of holder units (2A) in a manner that establishes flow gaps (24).

10. The battery pack as cited in claim 6 wherein the potting resin (7) completely embeds all the batteries (1).

11. The battery pack as cited in claim 6 wherein potting resin (7) fills the space between the batteries (1) and the battery holder (2) insertion sections (21).

12. The battery pack as cited in claim 11 wherein filling grooves (25) are provided on the inside surfaces of the battery holder (2) insertion sections (21) extending in the lengthwise direction of the batteries (1); a plurality of rows of filling grooves (25) is provided on the inside surface of each insertion section (21); and potting resin (7) is able to flow into the filling grooves (25) to fill the space between the batteries (1) and the inside surfaces of the insertion sections (21).

13. The battery pack as cited in claim 11 wherein the shape of the inside of the battery holder (2) insertion sections (21) tapers to reduce the inside diameter from the center of the insertion sections (21) towards both end regions.

14. The battery pack as cited in any of claims 1-13 wherein a plurality of batteries (1) is disposed in multiple rows and columns in a battery holder (2) to form a battery block (10); and a plurality of battery blocks (10) is housed in the battery case (3).

15. The battery pack as cited in claim 14 wherein potting resin (7) fills the battery case (3) to embed the battery blocks (10) housed in the battery case (3).

## Patentansprüche

1. Batteriepack, das Folgendes umfasst:
mehrere Batterien (1), die aufgeladen werden können; und
Batteriehalter (2), in denen die Batterien (1) in mehreren Reihen und Spalten und in paralleler Orientierung angeordnet sind,
wobei die Batteriehalter (2) mit Einsetzabschnitten (21) versehen sind, die durch Trennwände (22) getrennt sind, wo die Batterien (1) in festen Positionen eingesetzt angeordnet sind; und jede Batterie (1) die Trennwände (22) kontaktiert und mit den Trennwänden (22) thermisch koppelt, um durch die Batterien (1) erzeugte Wärme auf die Batteriehalter (2) zu übertragen und abzuführen,
wobei die Batterien (1) kreisförmige zylindrische Batterien sind und die Einsetzabschnitte (21) der Batteriehalter (2) kreisförmige Zylinder sind, die der Form der Oberflächen der Batterie (1) entsprechen,
**dadurch gekennzeichnet, dass**
jede der Batteriehaltertrennwände (22) zwischen benachbarten Reihen einen dünnen Teil (22a) aufweist, wobei der dünne Teil (22a) von der peripheren Reihe in Richtung mittlere Reihe von in mehreren Reihen angeordneten Batterien (1) allmählich zunimmt, so dass die Wärmekapazität der Trennwände (22), die mit den in mittleren Regionen der Batteriehalter (2) angeordneten Batterien (1) thermisch gekoppelt sind, größer ist als die Wärmekapazität der Trennwände (22), die mit den in peripheren Regionen der Batteriehalter (2) angeordneten Batterien (1) thermisch gekoppelt sind.

2. Batteriepack nach Anspruch 1, wobei der dünnste Teil der Einsetzabschnittstrennwände (22) in mittleren Regionen der Batteriehalter (2) dicker ist als in peripheren Regionen.

3. Batteriepack nach Anspruch 1 oder 2, wobei die Dicke eines dünnen Teils (22b) zwischen benachbarten Spalten von Trennwänden (22) in derselben Reihe gleich ist.

4. Batteriepack nach Anspruch 1 oder 2, wobei die Dicke eines dünnen Teils (22b) zwischen benachbarten Spalten von Trennwänden (22) in derselben Reihe in Richtung der Mitte der Reihe größer wird als an beiden Enden.

5. Batteriepack nach einem der Ansprüche 1-4, wobei der Batteriehalter (2) aus einem isolierenden Kunststoff besteht und die Batteriehalter (2) einstückig geformte Trennwände (22) aufweisen, die Einsetzabschnitte (21) definieren, in die die Batterien (1) separat eingesetzt werden.

6. Batteriepack nach einem der Ansprüche 1-5, wobei Raum zwischen dem Batteriehalter (2) und den Batterien (1) mit Vergussharz (7) ausgefüllt wird.

7. Batteriepack nach Anspruch 6, wobei ein Batteriegehäuse (3) zum Aufnehmen der Batteriehalter (2) vorgesehen ist und die Innenseite des Batteriegehäuses (3) mit Vergussharz (7) ausgefüllt ist, um die Batterie (1) in Vergussharz (7) einzubetten.

8. Batteriepack nach Anspruch 7, wobei jeder Batteriehalter (2) ein Paar separate Haltereinheiten (2A) umfasst; die Enden jeder Batterie (1) in die Einsetzabschnitte (21) der separaten Haltereinheiten (2A) eingesetzt sind, um die Batterien (1) in festen Positionen anzuordnen,
wobei Befestigungsmittel (23) vorgesehen sind, die zum Fixieren der relativen Verbindungsposition des Paares von Haltereinheiten (2A) konfiguriert sind, um das Paar Haltereinheiten (2A) zusammenzufügen und Durchflusslücken (24) herzustellen, die Vergussharz (7) durch die gegenüberliegenden Flächen der Haltereinheiten (2A) durchlassen können, und
wobei das Paar Haltereinheiten (2A) über die Durchflusslücken (24) bildenden Befestigungsmittel (23) zusammengefügt ist; und in das Batteriegehäuse (3) eingeleitetes Vergussharz durch die Durchflusslücken (24) in den Einsetzabschnitt (21) jeder Haltereinheit (2A) fließen kann.

9. Batteriepack nach Anspruch 8, wobei die Befestigungsmittel (23) Verbindungsnaben (23X) sind, die von gegenüberliegenden Flächen des Paares von Haltereiriheiten (2A) vorstehen; und die Verbindungsnaben (23X) auf einer Seite in Verbindungsnaben (23X) auf der anderen Seite eingesetzt werden, um das Paar Haltereinheiten (2A) so zusammenzufügen, dass Durchflusslücken (24) entstehen.

10. Batteriepack nach Anspruch 6, wobei das Vergussharz (7) alle Batterien (1) vollständig einbettet.

11. Batteriepack nach Anspruch 6, wobei Vergussharz (7) den Raum zwischen den Batterien (1) und den Einsetzabschnitten (21) der Batteriehalter (2) ausfällt.

12. Batteriepack nach Anspruch 11, wobei Füllnuten (25) auf den Innenflächen der Einsetzabschnitte (21) der Batteriehalter (2) vorgesehen sind, die in Längsrichtung der Batterien (1) verlaufen; mehrere Reihen von Füllnuten (25) auf der Innenfläche jedes Einsetzabschnitts (21) vorgesehen sind; und Vergussharz (7) in die Füllnuten (25) fließen kann, um den Raum zwischen den Batterien (1) und den Innenflächen der Einsetzabschnitte (21) aufzufüllen.

13. Batteriepack nach Anspruch 11, wobei die Form der Innenseite der Einsetzabschnitte (21) der Batteriehalter (2) konisch zuläuft, um den Innendurchmesser von der Mitte der Einsetzabschnitte (21) in Richtung auf beide Endregionen zu reduzieren.

14. Batteriepack nach einem der Ansprüche 1-13, wobei mehrere Batterien (1) in mehreren Reihen und Spalten in einem Batteriehalter (2) angeordnet sind, um einen Batterieblock (10) zu bilden; und mehrere Batterieblöcke (10) im Batteriegehäuse (3) untergebracht sind.

15. Batteriepack nach Anspruch 14, wobei Vergussharz (7) das Batteriegehäuse (3) ausfüllt, um die im Batteriegehäuse (3) untergebrachten Batterieblöcke (10) einzubetten.

## Revendications

1. Bloc-batteries comprenant :
une pluralité de batteries (1) qui peuvent être chargées ; et
des supports de batteries (2) qui disposent les batteries (1) en rangées et colonnes multiples et en orientation parallèle,
dans lequel les supports de batterie (2) sont pourvus de sections d'insertion (21) séparées par des parois de division (22) où les batteries (1) sont insérées et disposées dans des positions fixes ; et chaque batterie (1) vient en contact avec les parois de division (22) et se couple thermiquement aux parois de division (2) pour transférer et dissiper la chaleur générée par les batteries (1) aux supports de batterie (2),
dans lequel les batteries (1) sont des batteries cylindriques à base circulaire et les sections d'insertion (21) des supports de batterie (2) sont des cylindres circulaires se conformant aux surfaces des batteries (1),
**caractérisé en ce que**
chacune des parois de division (22) des supports de batteries entre rangées adjacentes présente une partie mince (22a), la partie mince (22a) devenant graduellement plus épaisse de la rangée périphérique vers la rangée centrale de batteries (1) disposées en rangées multiples, rendant la capacité thermique des parois de division (22) thermiquement couplées aux batteries (1) disposées dans les régions centrales des supports de batteries (2) supérieure à la capacité thermique des parois de division (22) thermiquement couplées aux batteries (1) disposées dans les régions périphériques des supports de batteries (2).

2. Bloc-batteries selon la revendication 1, dans lequel la partie la plus mince des parois de division (22) des sections d'insertion est plus épaisse dans les régions centrales des supports de batteries (2) que dans les régions périphériques.

3. Bloc-batteries selon la revendication 1 ou 2, dans lequel l'épaisseur d'une partie mince (22b) entre colonnes adjacentes des parois de division (22) de la même rangée est la même.

4. Bloc-batteries selon la revendication 1 ou 2, dans lequel l'épaisseur d'une partie mince (22b) entre colonnes adjacentes des parois de division (22) de la même rangée devient plus épaisse vers le centre de la rangée qu'à l'une ou l'autre extrémité.

5. Bloc-batteries selon l'une quelconque des revendications 1 à 4, dans lequel le support de batterie (2) est constitué d'une matière plastique isolante et les supports de batteries (2) comprennent des parois de division moulées d'une pièce (22) qui définissent des sections d'insertion (21) où les batteries (1) sont insérées séparément.

6. Bloc-batteries selon l'une quelconque des revendications 1 à 5, dans lequel l'espace compris entre le support de batteries (2) et les batteries (1) est rempli d'une résine d'enrobage.

7. Bloc-batteries selon la revendication 6, dans lequel une enceinte de batteries (3) est fournie pour loger les supports de batteries (2) et l'intérieur de l'enceinte de batteries (3) est rempli de résine d'enrobage (7) pour intégrer les batteries (1) dans la résine d'enrobage (7).

8. Bloc-batteries selon la revendication 7, dans lequel chaque support de batterie (2) comprend une paire d'unités de support séparées (2A) ; les extrémités de chaque batterie (1) sont insérées dans les sections d'insertion (21) des unités de support séparées (2A) pour disposer les batteries (1) dans des positions fixes,
dans lequel on prévoit des attaches (23) qui sont configurées pour fixer la position de raccordement relative de la paire d'unités de support (2A), joindre la paire d'unités de support (2A) et établir des intervalles d'écoulement (24) qui sont à même de laisser passer de la résine d'enrobage (7) à travers les surfaces opposées des unités de support (2A), et
dans lequel la paire d'unités de support (2A) est jointe via les attaches (23) en établissant des intervalles d'écoulement (24) ; et de la résine d'enrobage introduite dans l'enceinte de batteries (3) est à même de s'écouler à travers les intervalles d'écoulement (24) dans chaque section d'insertion (21) d'unité de soupape (2A).

9. Bloc-batteries selon la revendication 8, dans lequel les attaches (23) sont des bossages de raccordement (23X) faisant saillie de surfaces opposées de la paire d'unités de support (2A) ; et les bossages de raccordement (23X), d'un côté, s'insèrent dans les bossages de raccordement (23X) de l'autre côté pour joindre la paire d'unités de support (2A) d'une manière qui établit des intervalles d'écoulement (24).

10. Bloc-batteries selon la revendication 6, dans lequel la résine d'enrobage (7) intègre complètement toutes les batteries (1).

11. Bloc-batteries selon la revendication 6, dans lequel la résine d'enrobage (7) remplit l'espace entre les batteries (1) et les sections d'insertion (21) des supports de batteries (2).

12. Bloc-batteries selon la revendication 11, dans lequel des rainures de remplissage (25) sont ménagées sur les surfaces internes des sections d'insertion (21) des supports de batteries (2) s'étendant dans la direction longitudinale des batteries (1) ; une pluralité de rangées de rainures de remplissage (25) sont disposées sur la surface interne de chaque section d'insertion (21) ; et de la résine d'enrobage (7) est à même de s'écouler entre les rainures de remplissage (25) pour remplir l'espace entre les batteries (1) et les surfaces internes des sections d'insertion (21).

13. Bloc-batteries selon la revendication 11, dans lequel la forme de l'intérieur des sections d'insertion (21) des supports de batteries (2) s'amincit pour réduire le diamètre interne du centre des sections d'insertion (21) vers les deux régions d'extrémité.

14. Bloc-batteries selon l'une quelconque des revendications 1 à 13, dans lequel une pluralité de batteries (1) sont disposées en rangées et colonnes multiples dans un support de batteries (2) pour former un bloc-batteries (10) ; et une pluralité de blocs-batteries (10) sont logés dans l'enceinte de batteries (3) .

15. Bloc-batteries selon la revendication 14 dans lequel de la résine d'enrobage (7) remplit l'enceinte de batteries (3) pour intégrer les blocs-batteries (10) logés dans l'enceinte de batteries (3).
